Europäisches Patentamt

European Patent Office

Office européen des brevets

(11) Veröffentlichungsnummer: **0 594 685 B1**

(12) **EUROPÄISCHE PATENTSCHRIFT**

(45) Veröffentlichungstag der Patentschrift: **22.02.95**

(21) Anmeldenummer: **92914754.4**

(22) Anmeldetag: **10.07.92**

(86) Internationale Anmeldenummer:
**PCT/AT92/00093**

(87) Internationale Veröffentlichungsnummer:
**WO 93/01245 (21.01.93 93/03)**

(51) Int. Cl.⁶: **C09D 175/04**, C09D 167/08,
C08G 18/80, C08G 18/10,
//(C09D175/04,175:04,167:08),
(C09D167/08,175:04)

(54) **VERFAHREN ZUR HERSTELLUNG VON WASSERVERDÜNNBAREN LACKBINDEMITTELN UND DEREN VERWENDUNG.**

(30) Priorität: **12.07.91 AT 14009/91**

(43) Veröffentlichungstag der Anmeldung:
**04.05.94 Patentblatt 94/18**

(45) Bekanntmachung des Hinweises auf die
Patenterteilung:
**22.02.95 Patentblatt 95/08**

(84) Benannte Vertragsstaaten:
**AT BE DE ES FR GB IT NL SE**

(56) Entgegenhaltungen:
**EP-A- 0 339 433**
**DE-A- 3 428 204**

(73) Patentinhaber: **Vianova Kunstharz Aktiengesellschaft**
**Bundesstrasse 175**
**A-8402 Werndorf (AT)**

(72) Erfinder: **DWORAK, Gert**
**Dr. Robert Grafstrasse 25**
**A-8010 Graz (AT)**
Erfinder: **STARITZBICHLER, Werner**
**Im Hoffeld 6**
**A-8046 Graz (AT)**
Erfinder: **GÖLDNER, Wolfgang**
**Bayernstrasse 15**
**D-5628 Heiligenhaus (DE)**

**Beschreibung**

Die Erfindung betrifft ein Verfahren zur Herstellung von wasserverdünnbaren Lackbindemitteln und deren Verwendung zur Formulierung von Einbrennlacken, insbesonders von wasserverdünnbaren Füllern für die Automobillackierung.

Die Bindemittel enthalten ein nach Neutralisation der Carboxylgruppen wasserverdünnbares Reaktionsprodukt aus einem Carboxylgruppen und mindestens eine endständige blockierte Isocyanatgruppe aufweisenden Polyurethanharz (Polycarboxylkomponente) mit einem Hydroxylgruppen tragenden Polyester (Polyhydroxylkomponente) und eine Vernetzungskomponente.

Bindemittelkombinationen aus einer Polycarboxylkomponente, einer Polyhydroxylkomponente und einer Vernetzungskomponente sind beispielsweise in der AT-PS 328 587, AT-PS 388 738, AT-PS 388 382 und in der EP-A2-0330139 beschrieben.

Mit derartigen Bindemittelkombinationen werden für die Applikation vorteilhafte rheologische Eigenschaften der Lacke und eine sehr gute Haftfestigkeit der eingebrannten Lackfilme auf einem metallischen Substrat oder auf einer Grundierung sowie gegenüber Folgeschichten erreicht, wodurch die Formulierung hochwertiger, wasserverdünnbarer Füller, wie sie von der Automobilindustrie verwendet werden, ermöglicht wird.

Die in der industriellen Praxis seitens der Verbraucher gestellten Anforderungen an wasserverdünnbare Füller sind laufenden Änderungen unterworfen und es bedarf großer Anstrengungen, möglichst universell einsetzbare Produkte zur Verfügung zu stellen.

Überraschenderweise wurde nun gefunden, daß durch eine spezielle Auswahl der Bindemittelkomponenten und durch spezielle Verfahrensschritte für die Kombination dieser Bindemittelkomponenten weitere Verbesserungen in der Lagerstabilität der Lacke erreicht werden können.

Die vorliegende Erfindung betrifft demgemäß ein Verfahren zur Herstellung von wasserverdünnbaren Lackbindemitteln, welche ein Reaktionsprodukt aus einer Polycarboxylkomponente mit einer Polyhydroxylkomponente sowie eine Vernetzungskomponente enthalten, welches dadurch gekennzeichnet ist, daß man

(A) 10 bis 80 Gew.-%, vorzugsweise 15 bis 40 Gew.-%, eines Polyurethanharzes, welches durch Umsetzung einer Mischung aus einem Polyisocyanat und einem mittels Monohydroxylverbindungen und/oder Butanonoxim teilblockierten Polyisocyanat mit einer Dihydroxymonocarbonsäure, gegebenenfalls anteilig mit einem Polyol, erhalten wurde, und welches Carboxylgruppen entsprechend einer Säurezahl von 70 bis 160 mg KOH/g und im Molekül mindestens eine endständige blockierte Isocyanatgruppe, jedoch weder freie Hydroxylgruppen noch Fettsäurereste mit mehr als 12 C-Atomen enthält, sowie eine Grenzviskositätszahl von 6,5 bis 12,0 ml/g, vorzugsweise von 8,0 bis 11,0 ml/g, gemessen in N,N-Dimethylformamid (DMF) bei 20°C, aufweist,

mit

(B) 20 bis 90 Gew.-%, vorzugsweise 60 bis 85 Gew.-%, eines gegebenenfalls urethanmodifizierten Polyesterharzes mit einer Hydroxylzahl von 50 bis 500 mg KOH/g, einer Säurezahl von weniger als 20 mg KOH/g und einer Grenzviskositätszahl von 8,0 bis 13,0 ml/g, vorzugsweise von 9,5 bis 12,0 ml/g, gemessen in N,N-Dimethylformamid (DMF) bei 20°C, bei einer Temperatur zwischen 90 und 170°C, vorzugsweise bei einer Temperatur, die 10 bis 20°C über der Abspaltungstemperatur des Blockierungsmittels für die endständigen Isocyanatgruppen der Komponente (A) liegt, bis zu einer Grenzviskositätszahl von 13,5 bis 18,0 ml/g, vorzugsweise von 14,5 bis 16,5 ml/g, gemessen in N,N-Dimethylformamid (DMF) bei 20°C, reagiert, ohne daß dabei die Grenze der Löslichkeit in Wasser überschritten wird, weiters die Mengenverhältnisse zwischen den Komponenten (A) und (B) so wählt, daß das Reaktionsprodukt eine Säurezahl von mindestens 25 mg KOH/g, vorzugsweise von 30 bis 50 mg KOH/g, aufweist, und anschließend

(I) 60 bis 90 Gew.-% dieses Reaktionsproduktes, vor oder nach teilweiser oder vollständiger Neutralisation der Carboxylgruppen mit einer anorganischen oder organischen Base, jedoch vor Zugabe eines wesentlichen Anteils von Wasser, mit

(II) 10 bis 40 Gew.-% eines nicht wasserverdünnbaren blockierten Diisocyanats und/oder blockierten Polyisocyanats und/oder Kombinationen davon bei 40 bis 100°C mischt und mit Wasser auf einen für die weitere Verarbeitung geeigneten Feststoffgehalt verdünnt,

wobei die Summen der Prozentzahlen für die Zusammensetzung der Kombination aus (A) und (B) bzw. aus (I) und (II), auf Feststoff bezogen, jeweils 100 betragen.

Die Erfindung betrifft weiters die nach dem erfindungsgemäßen Verfahren hergestellten wasserverdünnbaren Lackbindemittel und deren Verwendung zur Formulierung von wasserverdünnbaren Einbrennlacken, insbesonders zur Formulierung von wasserverdünnbaren Füllern (Primer Surfacer) für die Automobillackierung.

EP 0 594 685 B1

Durch eine zusätzliche hydrolysestabile Verknüpfung der Polycarboxylkomponente (A) mit der Polyhydroxylkomponente (B) über die Urethangruppe, durch die Auswahl spezifischer Rohstoffe für die Polycarboxylkomponente (A) zur Verbesserung der Verträglichkeit des Reaktionsproduktes (I) mit der Vernetzungskomponente (II) und durch die Zumischung der Vernetzungskomponente vor der Zugabe eines wesentlichen Anteils von Wasser wird die Stabilität der mit den erfindungsgemäß hergestellten Bindemittelkombinationen formulierten Lacke wesentlich erhöht, was besonders für den Einsatz in industriellen Lackieranlagen mit Ringleitungssystemen von Bedeutung ist.

Überdies können in den Bindemittelkombinationen im Vergleich zu Produkten des Standes der Technik größere Anteile an Vernetzungskomponenten mitverwendet werden. Beim Lagern der Lacke ist keine Entmischung der Lackkomponenten festzustellen. Durch die Möglichkeit, somit die Reaktivität der Lacke in einem erweiterten Bereich zu beeinflussen, läßt sich gegebenenfalls auch die Zwischenschichthaftung der eingebrannten Filme verbessern.

Das als Polycarboxylkomponente (A) eingesetzte Polyurethanharz enthält als spezifischen Rohstoff eine Dihydroxymonocarbonsäure und weist anspruchsgemäß Carboxylgruppen entsprechend einer Säurezahl von 70 bis 160 mg KOH/g und pro Molekül mindestens eine endständige blockierte Isocyanatgruppe auf. Definitionsgemäß enthält die Polycarboxylkomponente (A) weiters weder Hydroxylgruppen noch Reste von Fettsäuren mit mehr als 12 C-Atomen. Das Blockierungsmittel wird bei erhöhter Temperatur, d. h. bei der Reaktionstemperatur zur Verknüpfung mit der Polyhydroxylkomponente (B), abgespalten. Die Polycarboxylkomponente (A) ist für sich allein, ebenso wie das Reaktionsprodukt (I) aus (A) und (B), nach teilweiser oder vollständiger Neutralisation der Carboxylgruppen mit einer Base, vorzugsweise mit einem sekundären oder tertiären Alkyl- oder Alkanolamin, wasserverdünnbar.

Das Polyurethanharz wird in bekannter Weise durch Umsetzung einer Mischung aus einem Polyisocyanat und einem mittels Monohydroxylverbindungen und/oder Butanonoxim teilblockierten Polyisocyanat mit der Dihydroxymonocarbonsäure und gegebenenfalls mit einem Polyol erhalten, wobei die Mengenverhältnisse so gewählt werden, daß im Molekül der hydroxylgruppenfreien Polycarboxylkomponente (A) durchschnittlich mindestens eine endständig blockierte Isocyanatgruppe vorliegt.

Als Dihydroxymonocarbonsäure wird vorzugsweise Dimethylolpropionsäure eingesetzt. Prinzipiell sind auch andere Dihydroxymonocarbonsäuren geeignet.

Als Polyisocyanatverbindungen werden vor allem die handelsüblichen Diisocyanate, wie Toluylendiisocyanat, Isophorondiisocyanat oder Hexamethylendiisocyanat, und gegebenenfalls auch geeignete Isocyanatprepolymere verwendet.

Zur Blockierung der freien NCO-Gruppen werden Monohydroxylverbindungen, insbesondere Monoalkohole, wie 2-Ethylhexanol, Monoether von Glykolen und Polyoxyalkylendiolen oder Butanonoxim so ausgewählt, daß sie bei der Umsetzung der Polycarboxylkomponente (A) mit der Polyhydroxylkomponente (B) abgespalten werden, d. h. die Abspaltungstemperatur soll zwischen 80 und höchstens 160°C liegen. Die Polycarboxylkomponente (A) hat eine Grenzviskositätszahl von 6,5 bis 12,0 ml/g, vorzugsweise von 8,0 bis 11,0 ml/g, gemessen in N,N-Dimethylformamid (DMF) bei 20°C.

Als Polyhydroxylkomponente (B) werden filmbildende Polyesterharze eingesetzt, die durch eine Hydroxylzahl von 50 bis 500 mg KOH/g, eine Säurezahl von weniger als 20 mg KOH/g und eine Grenzviskositätszahl von 8,0 bis 13,0 ml/g, vorzugsweise von 9,5 bis 12,0 ml/g, gemessen in N,N-Dimethylformamid (DMF) bei 20°C, gekennzeichnet sind. Die aus Polyolen und Polycarbonsäuren hergestellten Polyesterharze können gegebenenfalls Urethangruppen aufweisen und mit Monocarbonsäuren, die 5 bis 20 C-Atome enthalten, modifiziert sein. Der Anteil an Fettsäuren soll jedoch 15 Gew.-% nicht übersteigen

Die Komponenten (A) und (B) werden bei 90 bis 170°C, vorzugsweise bei einer Temperatur, die 10 bis 20°C über der Abspaltungstemperatur des Blockierungsmittels für die endständigen Isocyanatgruppen in der Polycarboxylkomponente (A) liegt, bis zu einer Grenzviskositätszahl von 13,5 bis 18,0 ml/g, vorzugsweise von 14,5 bis 16,5 ml/g, gemessen in N,N-Dimethylformamid (DMF) bei 20°C, reagiert, wobei zu beachten ist, daß das Reaktionsprodukt (I) nach einer Neutralisation der Carboxylgruppen noch einwandfrei wasserverdünnbar sein muß. Die Mengenverhältnisse liegen bei 10 bis 80 Gew.-%, vorzugsweise 15 bis 40 Gew.-%, für die Komponente (A) und bei 20 bis 90 Gew.-%, vorzugsweise 60 bis 85 Gew.-%, für die Komponente (B), auf Feststoff bezogen, wobei die Summe der Prozentzahlen jeweils 100 beträgt, und sie werden so gewählt, daß das Reaktionsprodukt (I) eine Säurezahl von mindestens 25 mg KOH/g, vorzugsweise zwischen 30 und 50 mg KOH/g, aufweist.

Das Reaktionsprodukt (I) wird anschließend vor oder nach teilweiser oder vollständiger Neutralisation der Carboxylgruppen mittels anorganischer oder organischer Basen, jedoch vor Zugabe eines wesentlichen Anteils von Wasser, mit einer nicht wasserverdünnbaren Vernetzungskomponente (II) gemischt und mit Wasser auf einen, für die weitere Verarbeitung geeigneten Feststoffgehalt verdünnt.

3

Als Vernetzungskomponente (II) werden vorzugsweise handelsübliche blockierte Diisocyanate oder blockierte Polyisocyanate eingesetzt, die möglichst geringe Anteile an organischen Lösemitteln aufweisen sollen.

Zur Steuerung von Oberflächenhärte und Elastizität der eingebrannten Lackfilme können vorteilhaft mehrere blockierte Di- oder Polyisocyanate, bevorzugt in Kombinationen von "weichen" und "harten" Typen in einem Verhältnis von 10 bis 35 Gew.-% zu 90 bis 65 Gew.-%, verwendet werden. Unter "weichen" Typen sind insbesonders solche Produkte zu verstehen, die aus aliphatischen Di- oder Polyisocyanaten durch Biuretbildung oder Oligomerisierung erhalten werden, zum Beispiel aus Hexamethylendiisocyanat. Bei "harten" Typen enthalten die als Ausgangsprodukte verwendeten Di- oder Polyisocyanate cycloaliphatische oder aromatische Kohlenwasserstoffreste. Als Beispiele für solche Diisocyanate seien genannt: Toluylendiisocyanat, Tetramethylxylylendiisocyanat, Diphenylmethandiisocyanat, Dicyclohexylmethandiisocyanat, Isophorondiisocyanat.

Weiterhin ist es möglich, auch wasserverdünnbare blockierte Polyisocyanate als Bestandteile der Vernetzerkomponente II einzusetzen. Bevorzugt werden solche blockierte Polyisocyanate nach dem vorstehend erwähnten Verdünnen mit Wasser zugemischt.

Als Basen für die Neutralisation der Carboxylgruppen des Reaktionsproduktes (I) werden vorzugsweise sekundäre oder tertiäre Alkyl- oder Alkanolamine verwendet.

Die Mengenverhältnisse von Reaktionsprodukt (I) und Vernetzungskomponente (II) liegen bei 60 bis 90 Gew.-% (I) und 10 bis 40 Gew.-% (II), wobei die Summe der Prozentzahlen jeweils 100 beträgt.

Die weitere Verarbeitung der erfindungsgemäß hergestellten Lackbindemittel erfolgt in bekannter Weise. Die Produkte werden vorzugsweise als Bindemittel für wasserverdünnbare Füller, insbesonders für die Automobillackierung, eingesetzt.

Die Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

In den Beispielen werden folgende Abkürzungen verwendet:

DGM       Diethylenglykoldimethylether
MIBK      Methylisobutylketon
TDI        Toluylendiisocyanat
              (handelsübliches Isomerengemisch mit ca. 80 % 2,4-TDI und ca. 20 % 2,6-TDI)
EEW       Epoxidäquivalentgewicht

Herstellung der Polycarboxylkomponenten

Komponente (A1): In einem geeigneten Reaktionsgefäß wird eine Lösung von 810 Tlen (6 Mol) Dimethylolpropionsäure in 946 Tlen DGM und 526 Tlen MIBK vorgelegt. Innerhalb von 4 Stunden wird zu dieser Lösung bei 100°C eine Mischung aus 870 Tlen (5 Mol) TDI und 528 Tlen (2 Mol) eines mit Ethylenglykolmonoethylether halbblockierten TDI gleichzeitig zugegeben. Sobald alle NCO-Gruppen umgesetzt sind, wird der Ansatz mit einer Mischung aus DGM und MIBK (2:1) auf einen Feststoffgehalt von 60 % verdünnt. Die Komponente (A1) weist eine Säurezahl von 140 mg KOH/g und eine Grenzviskositätszahl, gemessen in N,N-Dimethylformamid (DMF) bei 20°C, von 9,3 ml/g auf.

Das halbblockierte TDI wird durch Zugabe von 90 Tlen (1 Mol) Ethylenglykolmonoethylether zu 174 Tlen (1 Mol) TDI innerhalb von 2 Stunden bei 30°C und anschließender Reaktion bis zu einem NCO-Wert von 16 bis 17 % hergestellt.

Komponente (A2): In gleicher Weise wie bei (A1) werden 945 Tle (7 Mol) Dimethylolpropionsäure in 1079 Tlen DGM und 599 Tlen MIBK mit 1044 Tlen (6 Mol) TDI und 528 Tlen (2 Mol) eines mit Ethylenglykolmonoethylether halbblockierten TDI reagiert. Die Komponente (A2) weist einen Feststoffgehalt von 60 %, eine Säurezahl von 140 mg KOH/g und eine Grenzviskositätszahl, gemessen in N,N-Dimethylformamid (DMF) bei 20°C, von 10,2 ml/g auf.

Komponente (A3): In gleicher Weise wie bei (A1) wird zu einer Lösung von 270 Tlen (2 Mol) Dimethylolpropionsäure und 118 Tlen (1 Mol) Hexandiol in 361 Tlen DGM und 181 Tlen MIBK innerhalb von 4 Stunden bei 100°C eine Mischung aus 348 Tlen (2 Mol) TDI und 522 Tlen (2 Mol) eines mit Butanonoxim halbblockierten TDI zugegeben und bis zur Umsetzung aller NCO-Gruppen reagiert. Anschließend wird der Feststoffgehalt mit DGM/MIBK (2:1) auf 60 % eingestellt. Die Komponente (A3) weist eine Säurezahl von 89 mg KOH/g und eine Grenzviskositätszahl, gemessen in N,N-Dimethylformamid (DMF) bei 20°C, von 9,7 ml /g auf.

Das halbblockierte TDI wird durch Zugabe von 174 Tlen (2 Mol) Butanonoxim zu 696 Tlen (4 Mol) TDI innerhalb von 2 Stunden bei 30°C und anschließender Reaktion bis zu einem NCO-Wert von 28 bis 29 % hergestellt.

4

Herstellung der Polyhydroxylkomponenten

Komponente (B1): In einem geeigneten Reaktionsgefäß werden 130 Tle (1,1 Mol) Hexandiol-1,6, 82 Tle (0,6 Mol) Monopentaerythrit, 8 Tle (0,05 Mol) Isononansäure, 28 Tle (0,1 Mol) Rizinenfettsäure (dehydratisierte Rizinusölfettsäure) und 50 Tle (0,3 Mol) Isophthalsäure bei 210°C bis zu einer Säurezahl von weniger als 4 mg KOH/g verestert. Die Viskosität einer 50%igen Lösung in Ethylenglykolmonobutylether nach DIN 53211/20°C beträgt 125 Sekunden, die Grenzviskositätszahl, gemessen in N,N-Dimethylformamid bei 20°C, beträgt 9,8 ml/g.

Komponente (B2): In gleicher Weise wie bei (B1) werden 38 Tle (0,2 Mol) Tripropylenglykol, 125 Tle (1,2 Mol) Neopentylglykol, 28 Tle (0,1 Mol) isomerisierte Linolsäure, 83 Tle (0,5 Mol) Isophthalsäure und 58 Tle (0,3 Mol) Trimellithsäureanhydrid bei 230°C bis zu einer Säurezahl von weniger als 4 mg KOH/g verestert. Die Viskosität einer 50%igen Lösung in Ethylenglykolmonobutylether nach DIN 53211/20°C beträgt 165 Sekunden. Die Grenzviskositätszahl, gemessen in N,N-Dimethylformamid bei 20°C, beträgt 10,5 ml/g.

Komponente (B3): 259 Tle (1,35 Mol) Tripropylenglykol, 8 Tle (0,05 Mol) Isononansäure, 42 Tle (0,15 Mol) isomerisierte Linolsäure, 68,5 Tle (0,5 Mol) Monopentaerythrit und 175 Tle (1,05 Mol) Isophthalsäure werden in Gegenwart von 0,5 Tlen Dibutylzinndilaurat bei 220°C bis zu einer Säurezahl von 4 mg KOH/g verestert. Die Viskosität nach DIN 53211/20°C einer 70%igen Lösung in Ethylenglykolmonobutylether beträgt 120 Sekunden. Nach dem Verdünnen mit 260 Tlen Methylethylketon, werden bei 70°C innerhalb von 3 Stunden 70 Tle (0,4 Mol) TDI zugegeben. Die Temperatur wird gehalten, bis alle NCO-Gruppen umgesetzt sind. Das Methylethylketon wird im Vakuum entfernt und anschließend wird der Ansatz mit Methoxypropoxypropanol auf einen Feststoffgehalt von 93 % verdünnt. Die Viskosität nach DIN 53211/20°C einer 42%igen Lösung in Ethylenglykolmonobutylether beträgt 58 Sekunden. Die Grenzviskositätszahl, gemessen in N,N-Dimethylformamid bei 20°C, beträgt 12,1 ml/g.

Komponente (B4); 259 Tle (1,35 Mol) Tripropylenglykol, 25 Tle (0,15 Mol) Isophthalsäure und 97 Tle (0,5 Mol) Trimellithsäureanhydrid werden in Gegenwart von 0,2 Tlen Dibutylzinndilaurat bei 220°C bis zu einer Säurezahl von 15 mg KOH/g verestert. Die Viskosität nach DIN 53211/20°C einer 50%igen Lösung in Ethylenglykolmonobutylether beträgt 60 Sekunden. Die Grenzviskositätszahl, gemessen in N,N-Dimethylformamid bei 20°C, beträgt 11,4 ml/g.

Herstellung der Bindemittelkomponente (I)

Entsprechend den in Tabelle 1 angegebenen Mengenverhältnissen werden die Polycarboxylkomponente (A) und die Polyhydroxylkomponente (B) miteinander gemischt und das vorhandene Lösemittel während des Aufheizens auf die angegebene Reaktionstemperatur unter Vakuum weitgehend entfernt. Diese Temperatur wird gehalten, bis die gewünschte Säurezahl und Grenzviskositätszahl erreicht worden sind, wobei eine Probe nach Neutralisation mit Dimethylethanolamin einwandfrei wasserverdünnbar ist. Die Komponenten werden gemäß den Beispielen 1 bis 4 unmittelbar weiterverarbeitet.

Tabelle 1

(alle Mengenangaben beziehen sich auf Feststoff)

| Reaktions-produkt | Komponente (A) Tle / Typ | | Komponente (B) Tle / Typ | | Reaktions-temperatur[1] | Säurezahl mg KOH/g | $[\eta]$[2] ml/g |
|---|---|---|---|---|---|---|---|
| I/1 | 35 | (A1) | 65 | (B1) | 150 - 160°C | 41 - 45 | 16,7 |
| I/2 | 30 | (A2) | 70 | (B2) | 150 - 160°C | 35 - 39 | 16,0 |
| I/3 | 40 | (A3) | 60 | (B3) | 150 - 160°C | 29 - 32 | 14,9 |
| I/4 | 23 | (A1) | 77 | (B4) | 150 - 160°C | 33 - 37 | 15,8 |

1) Die Reaktion erfolgt in ca. 90%iger Lösung im DGM
2) Grenzviskositätszahl, gemessen in N,N-Dimethylformamid (DMF) bei 20°C

Beispiele 1 bis 4:

Entsprechend den Angaben in Tabelle 2 wird das Reaktionsprodukt (I) bei 40 bis 100°C mit der Vernetzungskomponente (II) gemischt und mit Dimethylethanolamin auf den angegebenen Neutralisationsgrad eingestellt. Es ist auch möglich, das Reaktionsprodukt (I) vor der Zugabe der Vernetzungskomponente (II) zu neutralisieren. Anschließend wird mit deionisiertem Wasser verdünnt.

Als Vernetzungskomponente (II) wurden eingesetzt:

IC 1  handelsübliches, mit Butanonoxim blockiertes Polyisocyanat (trimeres Hexamethylendiisocyanat mit Isocyanuratstruktur), z. B. Desmodur ® N 3390, Bayer.

IC 2  handelsübliches, mit Butanonoxim blockiertes Polyisocyanat (trimeres Hexamethylendiisocyanat mit Biuretstruktur), z. B. Desmodur ® N 100, Bayer.

## Tabelle 2

(alle Mengenangaben beziehen sich auf Feststoff)

| Beispiel | Reaktionsprodukt(I) Tle / Typ | | Vernetzungskomponente (II) Tle / Typ | | Neutralisationsgrad | Feststoffgehalt nach Verdünnung mit $H_2O$ |
|---|---|---|---|---|---|---|
| 1 | 70 / | (I/1) | 30 / | C 1 | 90 % | 35 % |
| 2 | 65 / | (I/2) | 35 / | C 1 | 90 % | 35 % |
| 3 | 70 / | (I/3) | 30 / | C 2 | 95 % | 35 % |
| 4 | 70 / | (I/4) | 30 / | C 2 | 90 % | 34 % |

7

Prüfung der Lagerstabilität eines Klarlacks auf Basis des Bindemittels gemäß Beispiel 4

Die Stabilität wurde an wäßrigen Klarlacken geprüft. Als Vergleich wurde ein Klarlack auf der Basis von Beispiel 3 aus der EP-A2-0 330 139 herangezogen.

Zusammensetzung und Kennzahlen der Klarlacke

| Klarlack | A 1 | B 1 |
|---|---|---|
| Bindemittel gemäß Beispiel 4 / 34 % | 100 | |
| Bindemittel gemäß Beispiel 3 EP-A2-0 330 139 / 47,6 % | | 49,8 |
| Wasser | -- | 22 |
| Neutralisationsmittel | -- | 0,4 |
| Feststoffgehalt | 34 | 33 |
| Viskosität (P) | 1,2 P | 1,2 P |

Die Klarlacke werden in verschlossenen Glasflaschen bei 40°C gelagert. Die Ergebnisse der Lagerprüfung sind in der Tabelle 3 zusammengefaßt.

Tabelle 3

| Klarlack | A 1 | B 1 |
|---|---|---|
| bei Prüfbeginn | | |
| pH-Wert | 8,3 | 8,1 |
| Viskosität (P) | 1,2 | 1,2 |
| Aussehen | leicht milchig | leicht milchig |
| nach 1 Woche | | |
| pH-Wert | 7,9 | -- |
| Viskosität (P) | 0,9 | -- |
| Aussehen | leicht milchig | 2-phasig |
| nach 2 Wochen | | |
| pH-Wert | 7,9 | -- |
| Viskosität (P) | 0,9 | -- |
| Aussehen | leicht milchig | -- |
| nach 3 Wochen | | |
| pH-Wert | 7,8 | -- |
| Viskosität | 0,8 | -- |
| Aussehen | leicht milchig | -- |

Prüfung der erfindungsgemäßen Bindemittel als Automobilfüller

Die Bindemittel entsprechend den Beispielen 1 bis 4 und dem Beispiel 3 aus der EP-A2-0 330 139 werden als Automobilfüller formuliert.
286 Tle Bindemittel 35%ig
50 Tle Titandioxid (Rutil)
40 Tle Bariumsulfat
10 Tle Mikrotalkum
0,2 Tle Rußpigment
13,8 Tle Wasser
Die Lacke weisen einen Festkörpergehalt von ca. 50 %, einen pH-Wert von ca. 8,0 (eingestellt mittels Dimethylethanolamin) und eine Viskosität von ca. 1,2 P/20°C auf.

Die Füller werden mittels Druckluftpistole auf ein mit einer kathodisch abgeschiedenen Elektrotauchgrundierung (ca. 20μm) beschichtetes, zinkphosphatiertes Stahlblech appliziert.

Die Härtung der Füller erfolgt im Umluftofen, 20 Minuten bei 140°C bzw. 160°C bzw. 180°C. In allen Fällen wird eine Trockenfilmstärke von 35 ± 2 μm erreicht.

Auf die Füllerschicht wird ein handelsüblicher Alkydharz-Melaminharz-Automobildecklack aufgebracht, welcher 30 Minuten bei 135°C gehärtet wird. (Trockenfilm 35 ± 2 μm).

Die Beständigkeitseigenschaften der Filme (Lösungsmittel-, Waserfestigkeit) sowie die mechanischen Werte entsprechen bei allen Beschichtungen den Praxisanforderungen.

Die Steinschlagfestigkeit wird mit dem Steinschlagsimulationsgerät "SPLITT" (= Single Projectile Launching Impact-Tester) geprüft. Die Methode ist in der Zeitschrift FARBE + LACK, Heft 8/1984, ausführlich beschrieben. Für die vorliegende Prüfung beträgt der Aufprallwinkel 5°, der Kugeldurchmesser 3 mm bei einer Masse von 0,5 g. Die Aufprallgeschwindigkeit wurde mit 100 km/h gewählt. Die Prüflinge werden bei +20°C und bei -20°C getestet. Angegeben wird in der Tabelle die (weitgehend kreisrunde) Schadensfläche in mm$^2$ und die an der Schadensstelle freiliegende Schicht. (Blech - B, Grundierung - G, Füller - F).

Die Prüfergebnisse sind in Tabelle 4 zusammengefaßt und zeigen keine signifikanten Unterschiede.

Tabelle 4

Automobilfüller auf Basis von Beispiel

| | 1 | 2 | 3 | 4 | 3 aus EP-A2-0330139 |
|---|---|---|---|---|---|
| **"SPLITT" bei +20°C** | | | | | |
| 140°C | 5 - 8/G | 4 - 6/G | 4 - 7/G | 4 - 6/G | 7 - 10/G |
| 160°C | 4 - 7/G/F | 2 - 4/G | 3 - 5/G/F | 1/G | 5 - 8/G |
| 180°C | 4 - 7/G/F | 2 - 4/G | 3 - 5/G/F | 1/G | 5 - 8/B/F |
| **"SPLITT" bei -20°C** | | | | | |
| 140°C | 5 - 8 G | 3 - 5/G | 3 - 5/G | 3 - 5/G | 7 - 10/G |
| 160°C | 5 - 8/B/G | 2 - 3/G | 4 - 5/G/F | 2 - 4/G | 6 - 11/B/G |
| 180°C | 5 - 8/B/G/F | 3/G | 4 - 5/B/G/F | 1/G | 8 - 12/B/G/F |

**Patentansprüche**

**Patentansprüche für folgende Vertragsstaaten : AT, BE, DE, FR, GB, IT, NL, SE**

1. Verfahren zur Herstellung von wasserverdünnbaren Lackbindemitteln, welche ein Reaktionsprodukt aus einer Polycarboxylkomponente mit einer Polyhydroxylkomponente sowie eine Vernetzungskomponente enthalten, dadurch gekennzeichnet, daß man

   (A) 10 bis 80 Gew.-%, vorzugsweise 15 bis 40 Gew.-%, eines Polyurethanharzes, welches durch Umsetzung einer Mischung aus einem Polyisocyanat und einem mittels Monohydroxylverbindungen und/oder Butanonoxim teilblockierten Polyisocyanat mit einer Dihydroxymonocarbonsäure, gegebenenfalls anteilig mit einem Polyol, erhalten wurde, und welches Carboxylgruppen entsprechend einer Säurezahl von 70 bis 160 mg KOH/g und im Molekül mindestens eine endständige blockierte Isocyanatgruppe, jedoch weder freie Hydroxylgruppen noch Fettsäurereste mit mehr als 12 C-Atomen enthält, sowie eine Grenzviskositätszahl von 6,5 bis 12,0 ml/g, vorzugsweise von 8,0 bis 11,0 ml/g, gemessen in N,N-Dimethylformamid (DMF) bei 20°C, aufweist, mit

   (B) 20 bis 90 Gew.-%, vorzugsweise 60 bis 85 Gew.-%, eines gegebenenfalls urethanmodifizierten Polyesterharzes mit einer Hydroxylzahl von 50 bis 500 mg KOH/g, einer Säurezahl von weniger als 20 mg KOH/g und einer Grenzviskositätszahl von 8,0 bis 13,0 ml/g, vorzugsweise von 9,5 bis 12,0 ml/g, gemessen in N,N-Dimethylformamid (DMF) bei 20°C, bei einer Temperatur zwischen 90 und 170°C, vorzugsweise bei einer Temperatur, die 10 bis 20°C über der Abspaltungstemperatur des Blockierungsmittels für die endständigen Isocyanatgruppen der Komponente (A) liegt, bis zu einer Grenzviskositätszahl von 13,5 bis 18,0 ml/g, vorzugsweise von 14,5 bis 16,5 ml/g, gemessen in N,N-Dimethyl- formamid (DMF) bei 20°C, reagiert, ohne daß dabei die Grenze der Löslichkeit in Wasser überschritten wird, weiters die Mengenverhältnisse zwischen den Komponenten (A) und (B) so wählt, daß das Reaktionsprodukt eine Säurezahl von mindestens 25 mg KOH/g, vorzugsweise von 30 bis 50 mg KOH/g, aufweist, und anschließend

   (I) 60 bis 90 Gew.-% dieses Reaktionsproduktes, vor oder nach teilweiser oder vollständiger Neutralisation der Carboxylgruppen mit einer anorganischen oder organischen Base, jedoch vor Zugabe eines wesentlichen Anteils von Wasser, mit

   (II) 10 bis 40 Gew.-% eines nicht wasserverdünnbaren blockierten Diisocyanats und/oder blockierten Polyisocyanats und/oder Kombinationen davon bei 40 bis 100°C mischt und mit Wasser auf einen für die weitere Verarbeitung geeigneten Feststoffgehalt verdünnt,

   wobei die Summen der Prozentzahlen für die Zusammensetzung der Kombination aus (A) und (B) bzw. aus (I) und (II), auf Feststoff bezogen, jeweils 100 betragen.

2. Verfahren gemäß Anspruch 1, dadurch gekennzeichnet, daß in Komponente (A) als Dihydroxymonocarbonsäure Dimethylolpropionsäure eingesetzt wurde.

3. Verfahren gemäß Anspruch 1, dadurch gekennzeichnet, daß man als Komponente (B) ein Polyesterharz einsetzt, welches bis zu 15 Gew.-% an Monocarbonsäuren mit 5 bis 20 C-Atomen enthält.

4. Wasserverdünnbare Lackbindemittel, welche ein Reaktionsprodukt aus einer Polycarboxylkomponente mit einer Polyhydroxylkomponente, und eine Vernetzungskomponente enthalten, hergestellt gemäß den Ansprüchen 1 bis 3.

5. Verwendung der gemäß den Ansprüchen 1 bis 3 hergestellten Lackbindemittel zur Formulierung von wasserverdünnbaren Einbrennlacken.

6. Verwendung der gemäß den Ansprüchen 1 bis 3 hergestellten Lackbindemittel zur Formulierung von wasserverdünnbaren Füllern, insbesonders für die Automobillackierung.

**Patentansprüche für folgenden Vertragsstaat : ES**

1. Verfahren zur Herstellung von wasserverdünnbaren Lackbindemitteln, welche ein Reaktionsprodukt aus einer Polycarboxylkomponente mit einer Polyhydroxylkomponente sowie eine Vernetzungskomponente enthalten, dadurch gekennzeichnet, daß man

   (A) 10 bis 80 Gew.-%, vorzugsweise 15 bis 40 Gew.-%, eines Polyurethanharzes, welches durch Umsetzung einer Mischung aus einem Polyisocyanat und einem mittels Monohydroxylverbindungen und/oder Butanonoxim teilblockierten Polyisocyanat mit einer Dihydroxymonocarbonsäure, gegebenenfalls anteilig mit einem Polyol, erhalten wurde, und welches Carboxylgruppen entsprechend einer Säurezahl von 70 bis 160 mg KOH/g und im Molekül mindestens eine endständige blockierte Isocyanatgruppe, jedoch weder freie Hydroxylgruppen noch Fettsäurereste mit mehr als 12 C-Atomen enthält, sowie eine Grenzviskositätszahl von 6,5 bis 12,0 ml/g, vorzugsweise von 8,0 bis 11,0 ml/g, gemessen in N,N-Dimethylformamid (DMF) bei 20°C, aufweist, mit

(B) 20 bis 90 Gew.-%, vorzugsweise 60 bis 85 Gew.-%, eines gegebenenfalls urethanmodifizierten Polyesterharzes mit einer Hydroxylzahl von 50 bis 500 mg KOH/g, einer Säurezahl von weniger als 20 mg KOH/g und einer Grenzviskositätszahl von 8,0 bis 13,0 ml/g, vorzugsweise von 9,5 bis 12,0 ml/g, gemessen in N,N-Dimethylformamid (DMF) bei 20°C, bei einer Temperatur zwischen 90 und 170°C, vorzugsweise bei einer Temperatur, die 10 bis 20°C über der Abspaltungstemperatur des Blockierungsmittels für die endständigen Isocyanatgruppen der Komponente (A) liegt, bis zu einer Grenzviskositätszahl von 13,5 bis 18,0 ml/g, vorzugsweise von 14,5 bis 16,5 ml/g, gemessen in N,N-Dimethyl- formamid (DMF) bei 20°C, reagiert, ohne daß dabei die Grenze der Löslichkeit in Wasser überschritten wird, weiters die Mengenverhältnisse zwischen den Komponenten (A) und (B) so wählt, daß das Reaktionsprodukt eine Säurezahl von mindestens 25 mg KOH/g, vorzugsweise von 30 bis 50 mg KOH/g, aufweist, und anschließend

(I) 60 bis 90 Gew.-% dieses Reaktionsproduktes, vor oder nach teilweiser oder vollständiger Neutralisation der Carboxylgruppen mit einer anorganischen oder organischen Base, jedoch vor Zugabe eines wesentlichen Anteils von Wasser, mit

(II) 10 bis 40 Gew.-% eines nicht wasserverdünnbaren blockierten Diisocyanats und/oder blockierten Polyisocyanats und/oder Kombinationen davon bei 40 bis 100°C mischt und mit Wasser auf einen für die weitere Verarbeitung geeigneten Feststoffgehalt verdünnt,

wobei die Summen der Prozentzahlen für die Zusammensetzung der Kombination aus (A) und (B) bzw. aus (I) und (II), auf Feststoff bezogen, jeweils 100 betragen.

2. Verfahren gemäß Anspruch 1, <u>dadurch gekennzeichnet</u>, daß in Komponente (A) als Dihydroxymonocarbonsäure Dimethylolpropionsäure eingesetzt wurde.

3. Verfahren gemäß Anspruch 1, <u>dadurch gekennzeichnet</u>, daß man als Komponente (B) ein Polyesterharz einsetzt, welches bis zu 15 Gew.-% an Monocarbonsäuren mit 5 bis 20 C-Atomen enthält.

4. Verwendung der gemäß den Ansprüchen 1 bis 3 hergestellten Lackbindemittel zur Formulierung von wasserverdünnbaren Einbrennlacken.

5. Verwendung der gemäß den Ansprüchen 1 bis 3 hergestellten Lackbindemittel zur Formulierung von wasserverdünnbaren Füllern, insbesonders für die Automobillackierung.

**Claims**
**Claims for the following Contracting States : AT, BE, DE, FR, GB, IT, NL, SE**

1. Process for the preparation of water-dilutable coating binders which contain a reaction product of a polycarboxyl component with a polyhydroxyl component and contain a crosslinking component, <u>characterized</u> in that

(A) from 10 to 80 % by weight, preferably from 15 to 40% by weight, of a polyurethane resin which has been obtained by reacting a mixture of a polyisocyanate and of a polyisocyanate which is partly blocked by monohydroxyl compounds and/or by butanone oxime with a dihydroxymonocarboxylic acid and, if desired, with proportionate quantities of a polyol, and which contains carboxyl groups corresponding to an acid number of from 70 to 160 mg of KOH/g and contains, in the molecule, at least one terminal blocked isocyanate group but neither free hydroxyl groups nor fatty acid radicals having more than 12 C atoms, as well as an intrinsic viscosity of from 6.5 to 12.0 ml/g, preferably from 8.0 to 11.0 ml/g, measured in N,N-dimethylformamide (DMF) at 20°C, are reacted with

(B) from 20 to 90 % by weight, preferably from 60 to 85% by weight, of a polyester resin which may be urethane-modified and has a hydroxyl number of from 50 to 500 mg of KOH/g, an acid number of less than 20 mg of KOH/g and an intrinsic viscosity of from 8.0 to 13.0 ml/g, preferably from 9.5 to 12.0 ml/g, measured in N,N-dimethylformamide (DMF) at 20°C at a temperature of between 90 and 170°C, preferably at a temperature which is from 10 to 20°C above the temperature at which the blocking agent for the terminal isocyanate groups of component (A) is eliminated, up to an intrinsic viscosity of from 13.5 to 18.0 ml/g, preferably from 14.5 to 16.5 ml/g, measured in N,N-dimethylformamide (DMF) at 20°C, without exceeding the limit of solubility in water, and, furthermore, the proportions of component (A) to component (B) being chosen such that the reaction product has an acid number of at least 25 mg of KOH/g, preferably from 30 to 50 mg of KOH/g, and subsequently

(I) from 60 to 90 % by weight of this reaction product, before or after partial or complete neutralization of the carboxyl groups with an inorganic or organic base, but before addition of a significant proportion of water, are mixed at from 40 to 100°C with

(II) from 10 to 40 % by weight of a non-water-dilutable blocked diisocyanate and/or blocked polyisocyanate and/or combinations thereof, and the mixture is diluted with water to a solids content suitable for its further processing,

the sums of the percentages for the composition of the combination of (A) and (B) and of (I) and (II), based on solids, being in each case 100.

2. Process according to claim 1, characterized in that in component (A) the dihydroxymonocarboxylic acid employed was dimethylolpropionic acid.

3. Process according to claim 1, characterized in that as component (B) a polyester resin is employed which contains up to 15% by weight of monocarboxylic acids having from 5 to 20 C atoms.

4. Water-dilutable coating binders which contain a reaction product of a polycarboxyl component with a polyhydroxyl component and contain a crosslinking component, and are prepared according to claims 1 to 3.

5. Use of the coating binders prepared according to claims 1 to 3 for formulating water-thinnable stoving enamels.

6. Use of the coating binders prepared according to claims 1 to 3 for formulating water-thinnable fillers, especially for automotive coating.

**Claims for the following Contracting State: ES**

1. Process for the preparation of water-dilutable coating binders which contain a reaction product of a polycarboxyl component with a polyhydroxyl component and contain a crosslinking component, characterized in that

(A) from 10 to 80 % by weight, preferably from 15 to 40% by weight, of a polyurethane resin which has been obtained by reacting a mixture of a polyisocyanate and of a polyisocyanate which is partly blocked by monohydroxyl compounds and/or by butanone oxime with a dihydroxymonocarboxylic acid and, if desired, with proportionate quantities of a polyol, and which contains carboxyl groups corresponding to an acid number of from 70 to 160 mg of KOH/g and contains, in the molecule, at least one terminal blocked isocyanate group but neither free hydroxyl groups nor fatty acid radicals having more than 12 C atoms, as well as an intrinsic viscosity of from 6.5 to 12.0 ml/g, preferably from 8.0 to 11.0 ml/g, measured in N,N-dimethylformamide (DMF) at 20°C, are reacted with

(B) from 20 to 90 % by weight, preferably from 60 to 85% by weight, of a polyester resin which may be urethane-modified and has a hydroxyl number of from 50 to 500 mg of KOH/g, an acid number of less than 20 mg of KOH/g and an intrinsic viscosity of from 8.0 to 13.0 ml/g, preferably from 9.5 to 12.0 ml/g, measured in N,N-dimethylformamide (DMF) at 20°C at a temperature of between 90 and 170°C, preferably at a temperature which is from 10 to 20°C above the temperature at which the blocking agent for the terminal isocyanate groups of component (A) is eliminated, up to an intrinsic viscosity of from 13.5 to 18.0 ml/g, preferably from 14.5 to 16.5 ml/g, measured in N,N-dimethylformamide (DMF) at 20°C, without exceeding the limit of solubility in water, and, furthermore, the proportions of component (A) to component (B) being chosen such that the reaction product has an acid number of at least 25 mg of KOH/g, preferably from 30 to 50 mg of KOH/g, and subsequently

(I) from 60 to 90 % by weight of this reaction product, before or after partial or complete neutralization of the carboxyl groups with an inorganic or organic base, but before addition of a significant proportion of water, are mixed at from 40 to 100°C with

(II) from 10 to 40 % by weight of a non-water-dilutable blocked diisocyanate and/or blocked polyisocyanate and/or combinations thereof, and the mixture is diluted with water to a solids content suitable for its further processing,

the sums of the percentages for the composition of the combination of (A) and (B) and of (I) and (II), based on solids, being in each case 100.

2. Process according to claim 1, <u>characterized</u> in that in component (A) the dihydroxymonocarboxylic acid employed was dimethylolpropionic acid.

3. Process according to claim 1, <u>characterized</u> in that as component (B) a polyester resin is employed which contains up to 15% by weight of monocarboxylic acids having from 5 to 20 C atoms.

4. Use of the coating binders prepared according to claims 1 to 3 for formulating water-thinnable stoving enamels.

5. Use of the coating binders prepared according to claims 1 to 3 for formulating water-thinnable fillers, especially for automotive coating.

**Revendications**
**Revendications pour les Etats contractants suivants : AT, BE, DE, FR, GB, IT, NL, SE**

1. Procédé de préparation de liants diluables à l'eau pour peintures, qui contiennent un produit de réaction d'un composant polycarboxylé avec un composant polyhydroxylé et un composant de réticulation, caractérisé en ce que l'on fait réagir

   (A) 10 à 80% en masse, de préférence 15 à 40% en masse, d'une résine de polyuréthanne qui a été obtenue par réaction d'un mélange d'un polyisocyanate et d'un polyisocyanate partiellement bloqué au moyen de composés monohydroxylés et/ou de butanone-oxime avec un acide dihydroxymonocarboxylique, éventuellement de manière proportionnée avec un polyol, et qui comporte des groupes carboxyle correspondant à un indice d'acide de 70 à 160 mg de KOH/g et, dans la molécule, au moins un groupe isocyanate bloqué terminal, mais qui ne comporte ni groupes hydroxyle libres ni restes d'acides gras ayant plus de 12 atomes de carbone, ainsi qu'un indice de viscosité limite, mesuré dans le N,N-diméthylformamide (DMF) à 20°C, de 6,5 à 12,0 ml/g, de préférence de 8,0 à 11,0 ml/g,

      avec

   (B) 20 à 90% en masse, de préférence 60 à 85% en masse, d'une résine de polyester, éventuellement uréthannemodifiée, ayant un indice d'hydroxyle de 50 à 500 mg de KOH/g, un indice d'acide inférieur à 20 mg de KOH/g et un indice de viscosité limite, mesuré dans le N,N-diméthylformamide (DMF) à 20°C, de 8,0 à 13,0 ml/g, de préférence de 9,5 à 12,0 ml/g, à une température comprise entre 90 et 170°C, de préférence à une température qui est située 10 à 20°C au dessus de la température de clivage de l'agent de blocage pour les groupes isocyanates terminaux du composant (A), jusqu'à un indice de viscosité limite, mesuré dans le N,N-diméthylformamide (DMF) à 20°C, de 13,5 à 18,0 ml/g, de préférence de 14,5 à 16,5 ml/g, sans que la limite de solubilité dans l'eau soit dépassée, en outre on choisit les proportions pondérales entre les composants (A) et (B) de telle manière que le produit de réaction présente un indice d'acide d'au moins 25 mg de KOH/g, de préférence de 30 à 50 mg de KOH/g, puis on mélange

      (I) 60 à 90% en masse de ce produit de réaction, avant ou après neutralisation totale ou partielle des groupes carboxyle avec une base inorganique ou organique, mais avant addition d'une proportion sensible d'eau, avec

      (II) 10 à 40% en masse d'un diisocyanate bloqué non diluable à l'eau et/ou d'un polyisocyanate bloqué et/ou d'une combinaison de ceux-ci entre 40 et 100°C et on dilue à l'eau à une teneur en matière solide convenant pour le traitement subséquent,

   les sommes des pourcentages pour la composition de la combinaison de (A) et (B) ou de (I) et (II), rapportées à la matière solide, étant égales à 100 dans chaque cas.

2. Procédé selon la revendication 1, caractérisé en ce que de l'acide diméthylolpropionique a été utilise comme acide dihydroxymonocarboxylique dans le composant (A).

3. Procédé selon la revendication 1, caractérisé en ce que l'on utilise comme composant (B) une résine de polyester qui contient jusqu'à 15% en masse d'acides monocarboxyliques ayant 5 à 20 atomes de carbone.

14

4. Liants diluables à l'eau pour peintures, qui contiennent un produit de réaction d'un composant polycarboxylé avec un composant polyhydroxylé et un composant de réticulation, préparés selon les revendications 1 à 3.

5. Utilisation des liants pour peintures préparés selon les revendications 1 à 3 pour la formulation de peintures à cuire diluables à l'eau.

6. Utilisation des liants pour peintures préparés selon les revendications 1 à 3 pour la formulation de revêtements d'apprêt diluables à l'eau, en particulier pour la peinture automobile.

**Revendications pour l'Etat contractant suivant : ES**

1. Procédé de préparation de liants diluables à l'eau pour peintures, qui contiennent un produit de réaction d'un composant polycarboxylé avec un composant polyhydroxylé et un composant de réticulation, caractérisé en ce que l'on fait réagir

   (A) 10 à 80% en masse, de préférence 15 à 40% en masse, d'une résine de polyuréthanne qui a été obtenue par réaction d'un mélange d'un polyisocyanate et d'un polyisocyanate partiellement bloqué au moyen de composés monohydroxylés et/ou de butanone-oxime avec un acide dihydroxymonocarboxylique, éventuellement de manière proportionnée avec un polyol, et qui comporte des groupes carboxyle correspondant à un indice d'acide de 70 à 160 mg de KOH/g et, dans la molécule, au moins un groupe isocyanate bloqué terminal, mais qui ne comporte ni groupes hydroxyle libres ni restes d'acides gras ayant plus de 12 atomes de carbone, ainsi qu'un indice de viscosité limite, mesuré dans le N,N-diméthylformamide (DMF) à 20°C, de 6,5 à 12,0 ml/g, de préférence de 8,0 à 11,0 ml/g,

   avec

   (B) 20 à 90% en masse, de préférence 60 à 85% en masse, d'une résine de polyester, éventuellement uréthannemodifiée, ayant un indice d'hydroxyle de 50 à 500 mg de KOH/g, un indice d'acide inférieur à 20 mg de KOH/g et un indice de viscosité limite, mesuré dans le N,N-diméthylformamide (DMF) à 20°C, de 8,0 à 13,0 ml/g, de préférence de 9,5 à 12,0 ml/g, à une température comprise entre 90 et 170°C, de préférence à une température qui est située 10 à 20°C au dessus de la température de clivage de l'agent de blocage pour les groupes isocyanates terminaux du composant (A), jusqu'à un indice de viscosité limite, mesuré dans le N,N-diméthylformamide (DMF) à 20°C, de 13,5 à 18,0 ml/g, de préférence de 14,5 à 16,5 ml/g, sans que la limite de solubilité dans l'eau soit dépassée, en outre on choisit les proportions pondérales entre les composants (A) et (B) de telle manière que le produit de réaction présente un indice d'acide d'au moins 25 mg de KOH/g, de préférence de 30 à 50 mg de KOH/g, puis on mélange

      (I) 60 à 90% en masse de ce produit de réaction, avant ou après neutralisation totale ou partielle des groupes carboxyle avec une base inorganique ou organique, mais avant addition d'une proportion sensible d'eau, avec

      (II) 10 à 40% en masse d'un diisocyanate bloqué non diluable à l'eau et/ou d'un polyisocyanate bloqué et/ou d'une combinaison de ceux-ci entre 40 et 100°C et on dilue à l'eau à une teneur en matière solide convenant pour le traitement subséquent,

   les sommes des pourcentages pour la composition de la combinaison de (A) et (B) ou de (I) et (II), rapportées à la matière solide, étant égales à 100 dans chaque cas.

2. Procédé selon la revendication 1, caractérisé en ce que de l'acide diméthylolpropionique a été utilisé comme acide dihydroxymonocarboxylique dans le composant (A).

3. Procédé selon la revendication 1, caractérisé en ce que l'on utilise comme composant (B) une résine de polyester qui contient jusqu'à 15% en masse d'acides monocarboxyliques ayant 5 à 20 atomes de carbone.

4. Utilisation des liants pour peintures préparés selon les revendications 1 à 3 pour la formulation de peintures à cuire diluables à l'eau.

5. Utilisation des liants pour peintures préparés selon les revendications 1 à 3 pour la formulation de revêtements d'apprêt diluables à l'eau, en particulier pour la peinture automobile.